# EUROPÄISCHE PATENTSCHRIFT

(11) **EP 2 017 483 B1**
(45) Veröffentlichungstag und Bekanntmachung des Hinweises auf die Patenterteilung: **13.04.2011**
(21) Anmeldenummer: 08002436.7
(22) Anmeldetag: 11.02.2008
(51) Int. Cl.: F16B 7/18, F16B 37/04

(54) **Profilkonstruktion**
Profile construction
Structure de profilé

(30) Priorität: 26.02.2007 DE 102007009667
(43) Veröffentlichungstag der Anmeldung: 21.01.2009
(73) Patentinhaber: MiniTec Maschinenbau GmbH & Co. KG, 66914 Waldmohr (DE)
(72) Erfinder: Bauer, Bernhard, 66901 Schönenberg-Kübelberg (DE); Neumüller, Axel, 66989 Höheischweiler (DE); Risch, Heinz, 57410 GrosRederching (FR)
(74) Vertreter: Klein, Friedrich Jürgen

(56) Entgegenhaltungen:
- EP-A- 1 541 878
- DE-A1- 3 339 425
- DE-U1- 20 010 915

## Beschreibung

Die Erfindung betrifft eine Profilkonstruktion mit mindestens zwei im wesentlichen rechtwinklig zueinander angeordneten Profilstäben mit jeweils mindestens einer mit einer Hinterschneidung versehenen Längsnut und mindestens einem Verbindungselement zur lösbaren Verbindung der beiden Profilstäbe.

Zur Verbindung von Profilstäben der vorgenannten Art zeigt die FR 2 330 898 A1 eine Profilkonstruktion mit einem von zwei im Winkel zueinander angeordneten Schenkeln gebildeten einstückigen Verbindungselement, wobei der vertikal gerichtete Schenkel, einen im wesentlichen T-förmigen Querschnitt aufweist, und in einer Längsnut eines vertikal angeordneten Profilstabes verschieb- und arretierbar ist. Dabei gleitet der Querteil des T-förmigen Querschnittes des vertikalen Schenkels im hinterschnittenen Bereich der Längsnut, während der Steg des T-förmigen Querschnittes des Schenkels im engen Bereich der Längsnut gleitet.
Zur Arretierung des Verbindungselementes im Profilstab sind am vertikal gerichteten Schenkel des Verbindungselementes zwei Gewindebohrungen für zwei Schrauben vorgesehen, sodaß der Querteil des vertikal gerichteten Schenkels gegen die Innenseite des hinterschnittenen Bereiches der Längsnut des Profilstabes gedrückt und hierdurch im Profilstab arretiert werden kann (siehe hierzu insbesondere Fig. 1 der FR 2 330 898 A1).

Demgegenüber weist der horizontal gerichtete Schenkel des Verbindungselementes einen prismatischen Querschnitt auf, der es erlaubt, den Schenkel innerhalb des nicht hinterschnittenen Bereiches der Längsnut des quer gerichteten Profilstabes zu verschieben. Zum Arretieren der Lage des horizontal gerichteten Schenkels innerhalb des Profilstabes ist oberhalb des Schenkels ein, einen T-förmigen Querschnitt aufweisendes Haltemittel vorgesehen, dessen seitliche Vorsprünge in den hinterschnittenen Bereich der Längsnut ragen und an die Unterseiten von den hinterschnittenen Bereich begrenzenden Stegen gedrückt werden.

Nachteilig ist bei dieser Lösung, daß der vertikale Schenkel des Verbindungselementes aufgrund seines T-förmigen Querschnittes nur von den Stirnseiten des Profilstabes in diesen eingeschoben werden kann. Ein Einbringen des senkrechten Schenkels des Verbindungselementes in den Profilstab durch die Öffnungsbreite der Längsnut im nicht hinterschnittenen Bereich derselben, ist im Hinblick darauf, daß der Querschnitt des Schenkels dem Querschnitt der Längsnut entspricht, bei dieser Lösung nicht vorge-sehen und auch nicht möglich.

Die DE-10 2004 013 631 A1 zeigt eine Profilkonstruktion mit mindestens zwei im Winkel zueinander angeordneten Profilstäben mit jeweils mindestens einer mit einer Hinterschneidung versehenen Längsnut und mindestens einem Verbindungselement zur lösbaren Verbindung der beiden Profilstäbe, wobei das Verbindungselement einstückig ausgebildet ist und zwei im Winkel zueinander angeordnete Schenkel aufweist. Dabei ist die Breite mindestens eines der Schenkel eines jeden Verbindungselementes geringer als die Breite der Längsnut in deren nicht hinterschnittenem Bereich, sodaß dieser Schenkel durch den nicht hinterschnittenen Bereich der Längsnut hindurch in deren hinterschnittenen Bereich einführbar ist. Hierbei ist dem Schenkel ein mit mindestens einem Innengewinde versehenes Befestigungsmittel zugeordnet, dessen Breite im wesentlichen der Breite des hinterschnittenen Bereiches entspricht, und dessen Dicke geringer als die Breite der Längsnut im nicht hinterschnittenen Bereich ist, sodaß das Befestigungsmittel in einer gegenüber seiner Wirklage um 90° geschwenkten Lage durch die Längsnut hindurch in deren hinterschnittenen Bereich einführbar ist. Dadurch ist das Befestigungsmittel innerhalb des hinterschnittenen Bereiches der Längsnut in seine Wirklage schwenkbar und vom freien Ende des Schenkels derart zwischen diesen und die Querstege der Hinterschneidung bringbar ist, sodaß der Schenkel innerhalb der Längsnut durch das Befestigungsmittel arretierbar ist.

Hierdurch können, beispielsweise beim Einsetzen eines horizontalen Profilstabes zwischen zwei im Abstand zueinander und vertikal angeordnete Profilstäbe beide Verbindungselemente von jeweils einem stirnseitigen Ende des horizontalen Profilstabes in diesen derart eingeschoben werden, daß der eine Schenkel auf dem Grund des hinterschnittenen Bereiches des Profilstab aufliegt, während der andere Schenkel durch die Längsnut hindurch ragt und gegenüber der Oberseite des Profilstabes vorsteht.
In dieser Lage wird der einzubauende Profilstab zwischen die beiden Profilstäbe gebracht, wonach die beiden Verbindungselemente innerhalb der Längsnut derart verschoben werden, daß ihr jeweils senkrecht gerichteter Schenkel durch die Längsnut des jeweiligen senkrecht gerichteten Profilstabes in dessen hinterschnittenen Bereich geführt und mittels eines Befestigungsmittels an diesem befestigt wird.

Diese Lösung zeigt zwar gegenüber der Anordnung gemäß der FR 2 330 898 A1 einen konstruktiv einfacheren Aufbau und ermöglicht, zwischen zwei vertikal angeordneten Profilstäben nachträglich einen zusätzlichen horizontal gerichteten Profilstab einzubauen, ohne hierzu eine Demontage eines oder mehrerer der vertikal gerichteten Profilstäbe zu erfordern.

Nachteilig ist bei Profilkonstruktionen dieser Art, daß die Verbindung der jeweiligen Profilstäbe nur zwischen jeweils einer Längsseite und einer Stirnseite der Profilstäbe erfolgt, und es daher nicht möglich ist, beispielsweise in ein aus Profilstäben gebildetes Gestell mit Längs- und Querstützen nachträglich einen sich über die gesamte Länge des Gestells erstreckenden Profilstab ohne Teildemontage des Gestells zu integrieren.

Der Erfindung liegt die Aufgabe zu Grunde, eine Profilkonstruktion mit im wesentlichen rechtwinklig zueinander angeordneten und mit hinterschnittenen Längsnuten versehenen Profilstäben zu schaffen, die ein nachträgliches Integrieren von weiteren Profilstäben ermöglicht, ohne hierzu eine teilweise Demontage der vorhandenen Profilkonstruktion zu erfordern. Dabei soll ferner gewährleistet sein, daß die neu zu schaffende Verbindung zweier Profilstäbe entlang der gesamten Länge der jeweiligen Profilkonstruktion möglich ist, ohne hierzu eine Bearbeitung an den Profilstäben zu erfordern.

Diese Aufgabe wird, ausgehend von einer gattungsgemäßen Profilkonstruktion dadurch gelöst, daß
**a.)** ein Endbereich (6) des Verbindungselementes (5) derart ausgebildet ist, daß dieser in einer zur Längsrichtung des Profilstabes (A) im wesentlichen parallelen Lage derart in die Längsnut (2) des Profilstabes (B) einführbar ist, daß eine am Verbindungselement (5) ausgebildete Haltenase (8) einen der die Hinterschneidung der Längsnut (2) des Profilstabes (B) bildenden Stege (4) untergreift;
**b.)** das Verbindungselement (5) zumindest in einem Teilbereich seiner Länge eine Breite aufweist, die der Breite der Längsnut (2) des Profilstabes (A) entspricht, sodaß dieser über das Verbindungselement (5) schiebbar ist;
**c.)** das Verbindungselement (5) an seinem der Haltenase (8) gegenüber liegenden Ende einen Endbereich (17) zur Aufnahme eines verstellbaren Befestigungsmittels (18) aufweist, das sich am Grund der Längsnut (2) des Profilstabes (A) abstützt;
**d.)** das Verbindungselement (5) einen Mittenbereich (14) mit mindestens zwei Druckstücken (15) aufweist, die auf den den hinterschnittenen Bereich (3) bildenden bzw begrenzenden Stegen (4) des Profilstabes (A) kraftschlüssig aufliegen.

Durch die erfindungsgemäße Lehre wird der weitere Vorteil erreicht, daß alle Kreuzungsstellen der Profilstäbe frei von Verbindungselementen sind und diese an den miteinander verbundenen Profilstäben nahezu vollständig unsichtbar sind. Ferner wird der Vorteil erzielt, daß beide Profilstäbe an jeder beliebigen Stelle ihrer jeweils gesamten Länge miteinander verbindbar sind.

Eine vorteilhafte Weiterbildung des Verbindungselementes kann dadurch erreicht werden, wenn dessen Haltenase einen die Hinterschneidung der Längsnut bildenden Steg des Profilstabes untergreifenden Vorsprung aufweist, sodaß die Verbindung zwischen der Haltenase des Verbindungselementes und dem Profilstab innerhalb des hinterschnittenen Bereiches der Längsnut erfolgen kann.

Um die Haltenase zusammen mit deren Vorsprung an jeder beliebigen Stelle eines Profilstabes durch die Längsnut hindurch in deren hinterschnittenen Bereich einschwenken und positionieren zu können, ist die Haltenase an ihrer Unter- bzw Rückseite (13) gekrümmt oder polygonal ausgebildet ist.

Dabei ist es vorteilhaft, die Haltenase mittels eines Steges mit dem übrigen Bereich des Verbindungselementes einstückig auszubilden, wobei dieser zur Erzielung der Verschiebbarkeit der Haltenase innerhalb einer Längsnut zumindest auf einem Teilbereich seiner Höhe eine Breite aufweist, die der Breite der Längsnut entspricht.

Zur Erzielung einer kraftschlüssigen Verbindung zwischen dem Verbindungselement und den Stegen der Profilstäbe sind an den Seitenflächen des Verbindungselementes Druckstücke angeordnet, deren Unterseiten einen vertikalen Abstand zur Unterseite des Verbindungselementes aufweisen, der größer ist als die Dicke der Stege. Hierdurch bewegen sich die Unterseiten der Druckstücke beim Übereinanderschieben der Profilstäbe oberhalb der Stege und werden, sofern sie innerhalb eines Mittenbereiches des Verbindungselementes angeordnet sind, dessen Breite der Breite des hinterschnittenen Bereiches der Längsnut entspricht, beim Festziehen des Befestigungsmittels gegen diese gedrückt. Damit liegt die Verbindungsstelle zwischen dem Verbindungselement und dem über dieses zu schiebenden Profilstabes innerhalb dessen hinterschnittenem Bereich der Längsnut und ist von außen nicht sichtbar.

Um den Profilstab vollends über das Verbindungselement schieben und die Verbindung beider Profilstäbe an jeder beliebigen Stelle derselben positionieren zu können, ist die Breite des Verbindungselementes innerhalb eines an den Mittenbereich anschließenden Endbereiches des Verbindungselementes geringer als die Breite der Längsnuten, sodaß sich das Verbindungselement an jeder beliebigen Stelle des Profilstabes positionieren läßt.
Dies wird insbesondere dann ermöglicht, wenn der Abstand zwischen der Stirnseite des Vorsprunges der Haltenase und dem und Befestigungsmittel so groß ist, daß dieses neben der Seitenfläche des einen Profilstabes aus durch die Längsnut des anderen Profilstabes hindurch für beispielsweise einen Sechskant-Schraubendreher zugänglich ist.

Weitere Einzelheiten und Vorteile der Erfindung ergeben sich aus der nachfolgenden Beschreibung eines in der beigefügten Zeichnung dargestellten Ausführungsbeispieles der Erfindung.

Es zeigt:
- **Fig. 1:**: eine schaubildliche Darstellung eines Verbindungselementes
- **Fig. 2:**: eine Stirnansicht eines Profilstabes zusammen mit einem Verbindungselement vor dessen Einschwenken in dessen Längsnut;
- **Fig. 3:**: eine Stirnansicht des ersten Profilstabes zusammen mit dem in dessen Längsnut eingeschwenktem Verbindungselement;
- **Fig. 4:**: eine der Fig. 2 entsprechende schaubildliche Darstellung eines Profilstabes zusammen mit einem Verbindungselement vor dessen Einschwenkem in die Längsnut 2;
- **Fig. 5:**: eine der Fig. 3 entsprechende schaubildliche Darstellung eines Profilstabes zusammen mit einer in dessen Längsnut 2 eingeschwenkten Haltenase des Verbindungselementes mit den Steg des Profilstabes untergreifendem Vorsprung;
- **Fig. 6:**: eine schaubildliche Darstellung der miteinander verbundenen Profilstäbe und dabei verdecktem Verbindungselement;
- **Fig. 7:**: eine Stirnansicht des Profilstabes mit in dessen hinterschnittenen Bereich eingeführtem Verbindungselement;
- **Fig. 8a:**: eine Prinzipdarstellung zweier miteinander verbundener Profilstäbe, wobei sich der horizontale Profilstab im wesentlichen rechts des senkrechten Profilstabes in dessen oberen Bereich befindet;
- **Fig.8b:**: eine Prinzipdarstellung gemäß Fig. 8a, wobei sich der horizontale Profilstab im wesentlichen links des senkrechten Profilstabes in dessen oberen Bereich befindet;
- **Fig. 9a:**: eine Prinzipdarstellung zweier miteinander verbundener Profilstäbe, wobei sich der horizontale Profilstab im wesentlichen rechts des senkrechten Profilstabes in dessen unteren Bereich befindet;
- **Fig. 9b:**: eine Prinzipdarstellung gemäß Fig. 9a, wobei sich der horizontale Profilstab im wesentlichen links des senkrechten Profilstabes in dessen unteren Bereich befindet;

Bei den im Zusammenhang mit der Erfindung zu verwendenden Profilstäben handelt es sich um handelsübliche Profilstäbe, die an mindestens einer ihrer Längsseiten mit einer Längsnut 2 versehen sind. Vorzugsweise sind die Profilstäbe an jeder ihrer Längsseiten mit je einer Längsnut 2 versehen, die sich über die gesamte Länge des jeweiligen Profilstabes erstreckt. Jede der Längsnuten 2 weist einen hinterschnittenen Bereich 3 auf, der jeweils von zwei sich über die gesamte Länge der Längsnut 2 erstreckenden Stegen 4 gebildet bzw begrenzt wird. Hierbei ist davon ausgegangen, daß die Profile der beiden miteinander zu verbindenden Profilstäbe die jeweils gleichen Maße aufweisen.

Am Verbindungselement 5 ist an einem Endbereich 6 eine mit einem Vorsprung 7 versehene Haltenase 8 ausgebildet, die in einer ersten Ausführungsform eine im wesentlichen rechteckförmige Querschnittsform aufweisen kann. Die Ausbildung der Haltenase 8 ist dabei so getroffen, daß das Verbindungselement 5 von beiden Stirnseiten des jeweiligen Profilstabes in dessen Längsnut 2 derart einschiebbar ist, daß der Vorsprung 7 der Haltenase 8 im hinterschnittenen Bereich 3 der Längsnut 2 einen der Stege 4 untergreift. Der Vorsprung 7 kann mit einer Zahnung 9 versehen sein.

Die Haltenase 8 ist mittels eines Steges 11 mit dem übrigen Bereich des Verbindungselementes 5 einstückig ausgebildet, wobei die Dicke des Steges 11 in etwa der Breite der Längsnut 2 entspricht, sodaß bei in die Längsnut 2 eingeführtem Steg 11 eine Relativbewegung zwischen dem Verbindungselement 5 und dem Profilstab möglich ist. Die Haltenase 8 ist mit dem Steg fest verbunden und seitlich des Steges 11 durch jeweils eine horizontal gerichtete Fläche 12 begrenzt, die sich bei in den Profilstab eingeführter Haltenase 8 stets innerhalb der Längsnut 2 des Profilstabes befinden, dabei aber aus dieser nicht heraus ragen. Die ebenfalls in Längsrichtung des Profilstabes zu messende Länge der Haltenase 8 und damit auch die Länge des mit der Zahnung 9 versehenen Vorsprunges 7 haben keine wesentliche funktionelle Bedeutung und entsprechen im wesentlichen der Dicke des Verbindungselementes 5.

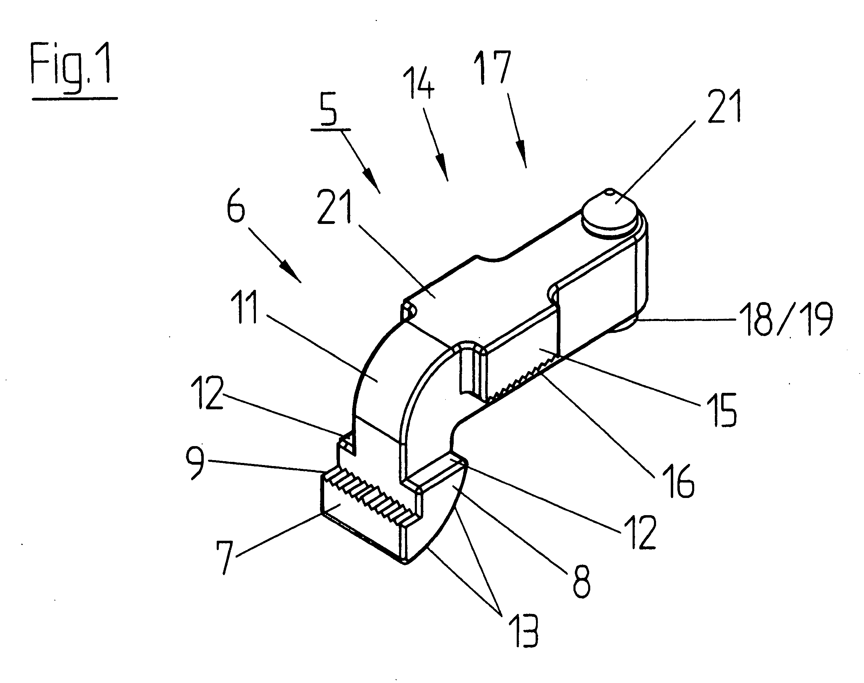

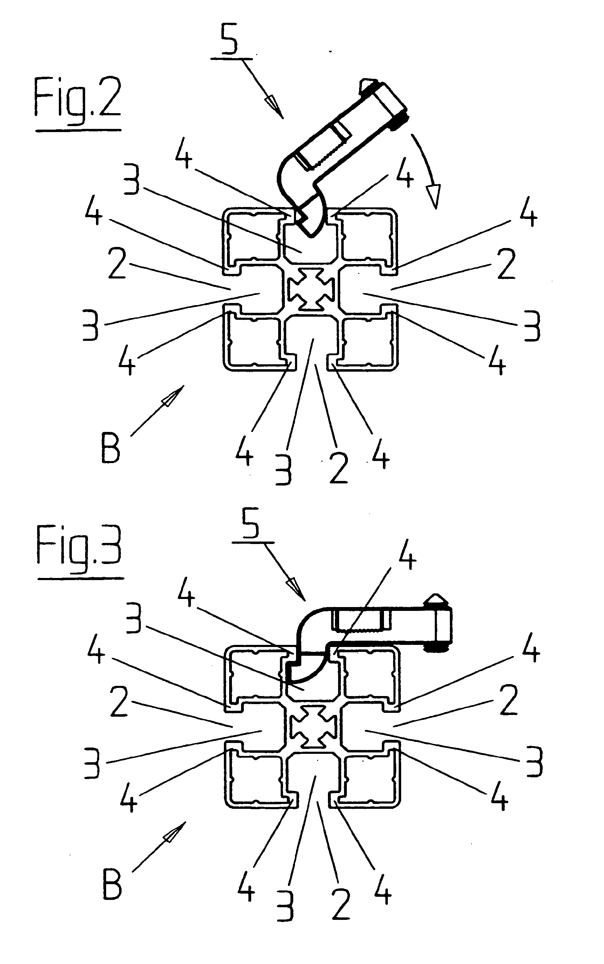

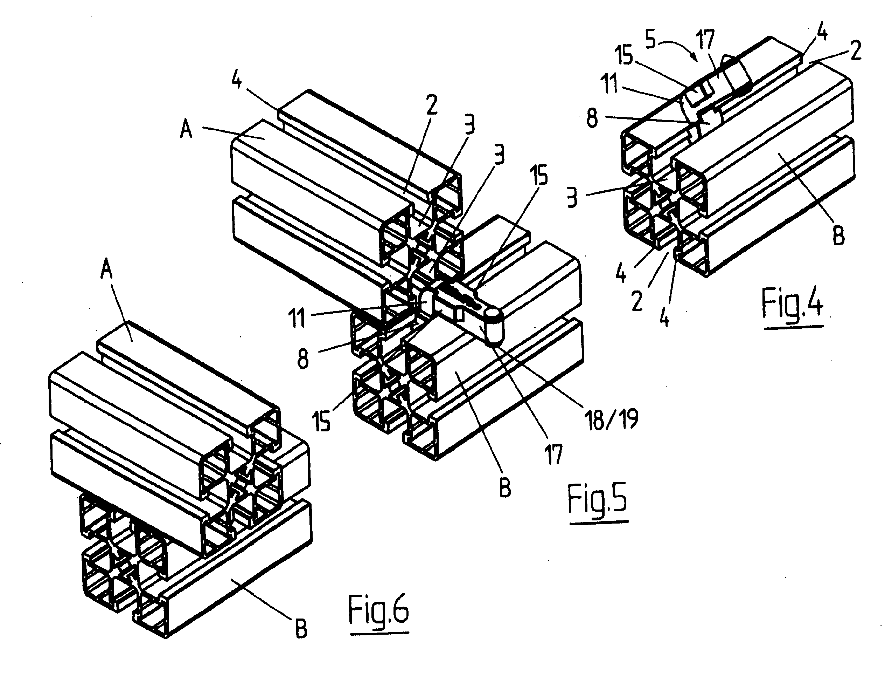

In einer bevorzugten und in Fig. 1 dargestellten Ausführungsform der Haltenase 8 ist diese an ihrer Unter- bzw Rückseite 13 derart gekrümmt, daß sie sich -ausgehend von der in den Fig. 2 und 4 gezeigten Ausgangslage, in der das Verbindungselement 5 schräg nach aufwärts gerichtet und die Haltenase 8 so weit in die Längsnut 2 eingeführt ist, daß sich die vordere Begrenzung des Vorsprunges 7 ungefähr auf der Höhe der Unterseite des Steges 4 befindet- durch eine nach abwärts gerichtete Schwenkbewegung derart in die Längsnut 2 und in deren hinterschnittenen Bereich 3 einführen läßt, daß der Vorsprung 7 den Steg 4 untergreift (Fig. 3 und 5). Das Verbindungselement 5 nimmt dabei eine im wesentlichen horizontale Lage ein, in der seine Unterseite einen vertikalen Abstand zur Oberseite des Profilstabes aufweist. Anstelle der Krümmung der Unter- bzw Rückseite 13 der Haltenase 8 kann diese polygonal ausgebildet sein.

Der Steg 11 ist mit einem Mittenbereich 14 des Verbindungselementes 5 einstückig ausgebildet, an dessen Seitenflächen je ein Druckstück 15 ausgebildet ist, das an seiner Unterseite mit einer Zahnung 16 versehen sein kann. Die beiden Druckstücke 15 erstrecken sich von der Oberseite des Verbindungselementes 5 nach abwärts, wobei ihre Unterseite einen definierten Abstand zur Unterseite des Verbindungselementes 5 aufweist. Dieser ist etwas größer als die Dicke der Stege 4 und so bemessen, daß sich bei in einen Profilstab eingesetztem Verbindungselement 5 der zu diesem rechtwinklig verlaufende Profilstab vom Endbereich 6 des Verbindungselementes 5 her leicht über den Mittenbereich 14 hinweg schieben läßt und diesen vollends überdeckt. In dieser Situation liegen die Unterseiten der beiden Druckstücke 15 auf der Oberseite der beiden die Hinterschneidungen bildenden Stege 4 des Profilstabes auf. Da sich der Mittenbereich 14 des Verbindungselementes 5 hierbei im hinterschnittenen Bereich 3 der Längsnut 2 befindet, und die Druckstücke 15 auf den -den hinterschnittenen Bereich 3 begrenzenden- Stegen 4 aufliegen, entspricht die Breite des Mittenbereiches 14 im wesentlichen der Breite der Hinterschneidung der Längsnut 2, sodaß der Mittenbereich 14 eine, wenn auch mit leichtem Spiel behaftete, Führung für das Verbindungselement 5 bildet.

An den Mittenbereich 14 des Verbindungselementes 5 schließt sich dessen Endbereich 17 an, dessen Breite ebenfalls der Breite der Längsnut 2 entspricht. Der Endbereich 17 dient zur Aufnahme eines Befestigungsmittels 18, und weist hierzu ein nicht näher bezeichnetes Innengewinde auf. Das Befestigungsmittel 18 kann daher von einer Innensechskantschraube 19 gebildet werden, die an ihrem freien Ende mit einer Körnerspitze oder einer Ringschneide 20 versehen sein kann.

Zur Herstellung einer Verbindung zweier Profilstäbe wird die Haltenase 8 des Verbindungselementes 5 in einer zur Längsrichtung des ersten Profilstabes A parallel gerichteten Lage in die Längsnut 2 des zweiten Profilstabes B eingeführt. Die beiden Profilstäbe A,B schließen dabei einen im wesentlichen rechten Winkel ein. Sofern die Haltenase 8 einen im wesentlichen rechteckförmigen Querschnitt aufweist, wird diese von einer der Stirnseiten des Profilstabes B in dessen Längsnut 2 eingeführt, wobei der Vorsprung 7 der Haltenase 8 den den hinterschnittenen Bereich 3 bildenden bzw begrenzenden Steg 4 untergreift. Das Verbindungselement 5 kann dabei an jeder beliebigen Stelle zwischen den Enden des Profilstabes B positioniert werden.

Sofern die Haltenase 8 anstelle des rechteckförmigen Querschnittes an ihrer Unter- bzw Rückseite 13 gekrümmt verläuft oder an diesen polygonal ausgebildet ist, wird die Haltenase 8 in der in den Fig. 2 und 4 gezeigten Lage in etwa so weit in die Längsnut 2 eingeführt, bis sich die vordere Begrenzung des Vorsprunges 7 ungefähr auf der Höhe der Unterseite des Steges befindet. Zum weiteren Einführen der Haltenase 8 in die Längsnut 2 bzw in den hinterschnittenen Bereich 3 derselben wird das Verbindungselement 5 von seiner Schräglage nach unten geschwenkt und gegebenenfalls dabei etwas nach abwärts bewegt, sodaß der Vorsprung 7 der Haltenase 8 den Steg 4 untergreift (Fig. 3 und 5). Das Verbindungselement 5 nimmt dabei eine leichte Schräglage ein, wobei seine Unterseite einen geringen Abstand zur Oberseite des Profilstabes B aufweist. In dieser Situation ist das Verbindungselement 5 entlang der Längsnut 2 verschieblich und kann zwischen den beiden Stirnseiten des Profilstabes B jede beliebige Position einnehmen, wobei der Vorsprung 7 der Haltenase 8 den Steg 4 stets untergreift.

In der durch die Längsverschiebung des Verbindungselementes 5 vorgegebenen Position wird der Profilstab A von der der Haltenase 8 zugekehrten Seite des Profilstabes B über das Verbindungselement 5 geschoben, wobei der Profilstab A auf der Oberseite des Profilstabes B aufliegen kann und der Profilstab A so positioniert ist, daß seine untere Längsnut 2 dem Steg 11 gegenüber liegt (Fig. 5) Zu Beginn der Schiebebewegung des Profilstabes A ragt zunächst der Steg 11 des Verbindungselementes 5 in die Längsnut 2 des Profilstabes A.

Im weiteren Verlauf der Schiebebewegung des Profilstabes A erreicht dessen vorderes Ende den Mittenbereich 14 des Verbindungselementes 5 und somit die der Haltenase 8 zugewandten Enden der Druckstücke 15. Da die Unterseite der Druckstücke 15 zur Unterseite des Verbindungselementes 5 einen Abstand aufweist, der etwas größer als die Dicke der Stege 4 ist, bewegt sich der Profilstab A über die Druckstücke 15 hinweg, wobei der Steg 11 weiterhin in die Längsnut 2 des Profilstabes A ragt, und die Druckstücke 15 sich oberhalb der Stege 4 des Profilstabes A befinden. In dieser Relativlage des Verbindungselementes 5 zum Profilstab A kann dieser beliebig weit -mindestens aber so weit- über das Verbindungselement 5 geschoben werden, bis der Profilstab A dieses vollständig überdeckt (Fig. 6), sodaß das vom Endbereich 17 des Verbindungselementes 5 aufgenommene Befestigungsmittel 18 in den hinterschnittenen Bereich 3 der Längsnut 2 des Profilstabes A ragt und damit das Verbindungselement 5 durch den Profilstab A vollständig überdeckt ist. In dieser Situation befindet sich das Befestigungsmittel 18 seitlich des Profilstabes B und ist -da es sich innerhalb der Längsnut 2 des Profilstabes A befindetvon dessen Unterseite zugänglich.

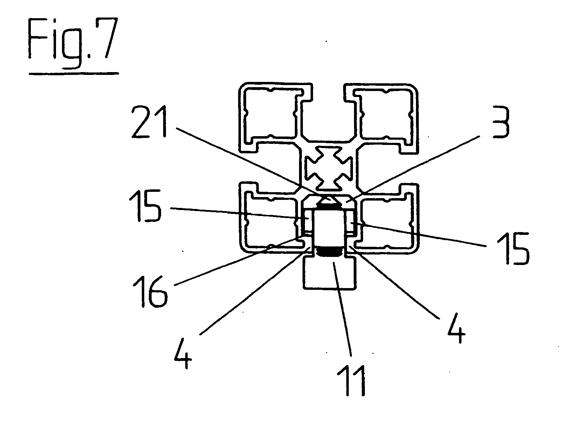

Sofern die so erreichte Relativlage der beiden Profilstäbe A,B noch nicht der angestrebten Relativlage beider Profilstäbe A, B entspricht, kann der Profilstab A so weit über den Profilstab B und das Verbindungselement 5 geschoben werden, bis die in Längsrichtung des Profilstabes A gesehene Relativlage beider Profilstäbe erreicht ist. Dies wird im wesentlichen dadurch erreicht, daß sowohl der Steg 11 in der Längsnut 2 als auch die Druckstücke 15 des Verbindungselementes 5 ungehindert im hinterschnittenen Bereich 3 des Profilstabes A gleiten können (Fig. 7).

Unabhängig von der Positionierbewegung des Profilstabes A untergreift der Vorsprung 7 der Haltenase 8 stets den Steg 4 des Profilstabes B. Da sich somit auch die Haltenase 8 weiterhin innerhalb der Längsnut 2 des Profilstabes B befindet, kann die Relativlage beider Profilstäbe A,B in Längsrichtung des Profilstabes B beliebig verändert werden, wobei entweder der Profilstab A oder der Profilstab B oder beide Profilstäbe A,B in Längsrichtung des Profilstabes B verschoben werden, ohne hierbei die in Längsrichtung des Profilstabes A zu sehende Realativlage des Profilstabes A zum Profilstab B zu verändern.

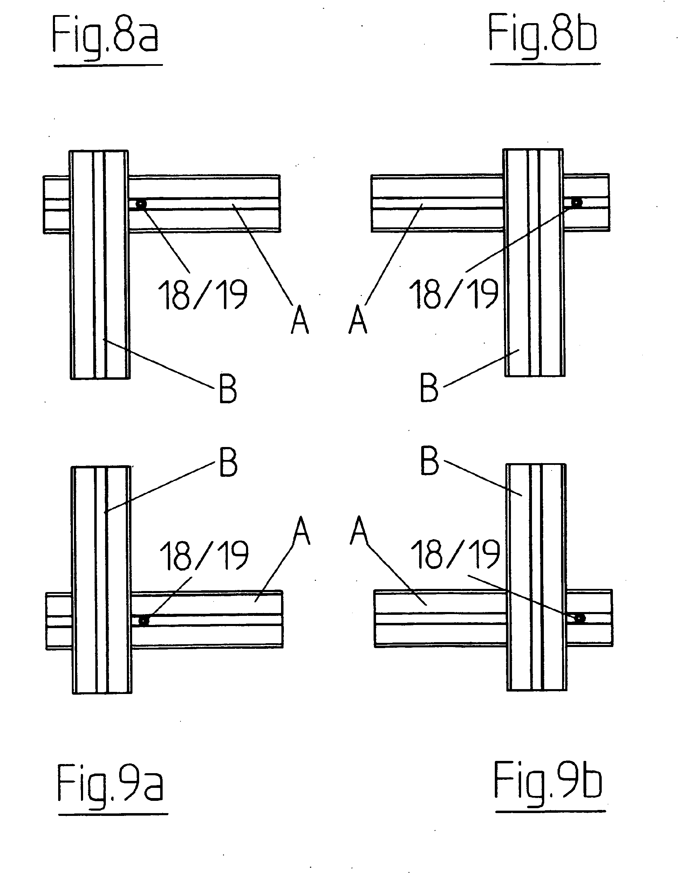

In Fig. 8a befindet sich der horizontal gerichtete Profilstab A der sich kreuzenden Profilstäbe A,B im wesentlichen rechts des senkrecht gerichteten Profilstabes B in dessen oberen Bereich. Demgegenüber ist in Fig 8b der horizontale Profilstab A in Bezug auf den Profilstab B derart horizontal verschoben, daß er sich im wesentlichen links des Profilstabes B befindet. Die senkrechte Relativlage beider Profilstäbe hat sich dabei nicht verändert, d.h. der horizontale Profilstab A befindet sich stets im oberen Bereich des Profilstabes B. Gemäß den Fig. 9a und 9b wurde der Profilstab A unter Beibehaltung seiner horizontalen Relativlage zum Profilstab B in senkrech-ter Richtung gegenüber dem Profilstab B derart verschoben, daß sich der Profilstab A nicht mehr im oberen Bereich sondern im unteren Bereich Profilstabes B befindet.
Da sich die Haltenase innerhalb der Längsnut des Profilstabes B unabhänvon der Lage des horizontalen Profilstabes A bewegen läßt, und der Profilstab A sich in jeder Lage der Haltenase des Verbindungselementes über dieses bewegen läßt, läßt sich der horizentale Profilstab A unabhängig von der jeweiligen Position der Haltenase innerhalb der Längsnut des Profilstabes B über das Verbindungselement hinweg schieben.

Damit kann mit der erfindungsgemäßen Lehre jede beliebige Relativlage der beiden Profilstäbe A,B innerhalb eines Koordinatensystems realisiert werden. Da sich während der Positionierbewegung des Profilstabes A der seitliche Abstand des freien Endes des Verbindungselementes 5 zum Profilstab B nicht verändert, bleibt das freie Ende des Verbindungselementes 5 und damit auch das von diesem aufgenommene Befestigungsmittel 18 in jeder Relativlage der Profilstäbe A,B von der Unterseite des Profilstabes A zugänglich und ist durch diesen verdeckt.
Damit kann Innensechskantschraube 19 in jeder Relativlage der beiden Profilstäbe A,B festgezogen werden, wobei sich deren Körnerspitze bzw Ringschneide 21 am Boden der Längsnut 2 des Profilstabes A abstützt. Durch das Festziehen der Innensechskantschraube 19 bewegt sich der Endbereich 17 vom Boden der Längsnut 2 wodurch die Druckstücke 15 ebenfalls nach abwärts bewegt werden und dadurch die den hinterschnittenen Bereich 3 bildenden bzw begrenzenden Stege 4 des Profilstabes A gegen die Oberseite des Profilstabes B drücken. Das Verbindungselement 5 kommt dabei in eine leichte Schräglage wodurch dessen Endbereich 6 etwas angehoben wird, wodurch der Vorsprung 7 des Verbindungselement 5 gegen die Unterseite der den hinterschnittenen Bereich 3 des Profilstabes B bildenden Stege gedrückt wird.

## Patentansprüche

1. Profilkonstruktion mit mindestens zwei im wesentlichen rechtwinklig zueinander angeordneten Profilstäben (A,B) mit jeweils mindestens einer mit einer Hinterschneidung versehenen Längsnut (2) und mindestens einem Verbindungselement (5) zur lösbaren Verbindung der beiden Profilstäbe, **dadurch gekennzeichnet, daß**
**a.)** ein Endbereich (6) des Verbindungselementes (5) derart ausgebildet ist, daß dieser in einer zur Längsrichtung des Profilstabes (A) im wesentlichen parallelen Lage derart in die Längsnut (2) des Profilstabes (B) einführbar ist, daß eine am Verbindungselement (5) ausgebildete Haltenase (8) einen der die Hinterschneidung der Längsnut (2) des Profilstabes (B) bildenden Stege (4) untergreift;
**b.)** das Verbindungselement (5) zumindest in einem Teilbereich seiner Länge eine Breite aufweist, die der Breite der Längsnut (2) des Profilstabes (A) entspricht, sodaß dieser über das Verbindungselement (5) schiebbar ist;
**c.)** das Verbindungselement (5) an seinem der Haltenase (8) gegenüber liegenden Ende einen Endbereich (17) zur Aufnahme eines verstellbaren Befestigungsmittels (18) aufweist, das sich am Grund der Längsnut (2) des Profilstabes (A) abstützt;
**d.)** das Verbindungselement (5) einen Mittenbereich (14) mit mindestens zwei Druckstücken (15) aufweist, die auf den den hinterschnittenen Bereich (3) bildenden bzw begrenzenden Stegen (4) des Profilstabes (A) kraftschlüssig aufliegen.

2. Profilkonstruktion nach Anspruch 1, **dadurch gekennzeichnet, daß**
die Haltenase (8) einen den Steg (4) des Profilstabes (A) untergreifenden Vorsprung (7) aufweist.

3. Profilkonstruktion nach Anspruch 1 und 2, **dadurch gekennzeichnet, daß**
die Haltenase (8) an ihrer Unter- bzw Rückseite (13) derart gekrümmt oder polygonal ausgebildet ist, daß sie durch die Längsnut (2) des jeweiligen Profilstabes hindurch an beliebiger Stelle der Längsnut (2) in deren hinterschnittenen Bereich (3) einführbar ist.

4. Profilkonstruktion nach Anspruch 1 bis 3, **dadurch gekennzeichnet, daß**
die Haltenase (8) mittels eines Steges (11) mit dem übrigen Bereich des Verbindungselementes (5) verbunden ist, und der Steg (11) zumindest auf einem Teilbereich seiner Höhe eine Breite aufweist, die der Breite der Längsnut (2) entspricht.

5. Profilkonstruktion nach Anspruch 1, **dadurch gekennzeichnet, daß**
die Druckstücke (15) an den Seitenflächen des Verbindungselementes (5) angeordnet sind und von deren Unterseiten einen vertikalen Abstand aufweisen, der größer als die Dicke der den hinterschnittenen Bereich (3) der Längsnut (2) bildenden bzw begrenzenden Stege (4) ist.

6. Profilkonstruktion nach Anspruch 5, **dadurch gekennzeichnet, daß**
die Druckstücke (15) innerhalb eines Mittenbereiches (14) des Verbindungselementes (5) angeordnet sind, dessen Breite geringer als die Breite des hinterschnittenen Bereiches (3) der Längsnut (2) ist.

7. Profilkonstruktion nach Anspruch 1, **dadurch gekennzeichnet, daß**
die Breite des Verbindungselementes (5) innerhalb eines an den Mittenbereich (14) anschließenden Endbereiches (17) geringer als die Breite der Längsnuten (2) ist und der Endbereich (17) ein Innengewinde zur Aufnahme eines Befestigungsmittels (18) aufweist.

8. Profilkonstruktion nach einem oder mehreren der vorangehenden Ansprüche, **dadurch gekennzeichnet, daß**
die Gesamtlänge eines Verbindungselementes (5) um einen bestimmten Betrag größer ist, als die Hälfte der Breite der Profilstäbe (A,B).

9. Verbindungselement zur Verwendung in einer Profilkonstruktion mit mindestens zwei im wesentlichen rechtwinklig zueinander angeordneten Profilstäben mit jeweils mindestens einer mit einer Hinterschneidung versehenen Längsnut zur lösbaren Verbindung der beiden Profilstäbe,
**dadurch gekennzeichnet, daß**
a.) ein Endbereich (6) des Verbindungselementes (5) derart ausgebildet ist, daß dieser in einer zur Längsrichtung des Profilstabes (A) im wesent-lichen parallelen Lage derart in die Längsnut (2) des Profilstabes (B) einführbar ist, daß eine am Verbindungselement (5) ausgebildete Haltenase (8) einen der die Hinterschneidung der Längsnut (2) des Profilstabes (B) bildenden Stege (4) untergreift;
b.) das Verbindungselement (5) zumindest in einem Teilbereich seiner Länge eine Breite aufweist, die der Breite der Längsnut (2) des Profilstabes (A) entspricht, sodaß dieser über das Verbindungselement (5) schiebbar ist;
c.) das Verbindungselement (5) an seinem der Haltenase (8) gegenüber liegenden Ende einen Endbereich (17) zur Aufnahme eines verstellbaren Befestigungsmittels (18) aufweist, das sich am Grund der Längsnut (2) des Profilstabes (A) abstützt;
d.) das Verbindungselement (5) einen Mittenbereich (14) mit mindestens zwei Druckstücken (15) aufweist, die auf den den hinterschnittenen Bereich (3) bildenden bzw begrenzenden Stegen (4) des Profilstabes (A) kraftschlüssig aufliegen.

10. Profilkonstruktion nach Anspruch 9, **dadurch gekennzeichnet, daß**
die Haltenase (8) einen den Steg (4) des Profilstabes (A) untergreifen-den Vorsprung (7) aufweist.

11. Profilkonstruktion nach Anspruch 9 und 10 **dadurch gekennzeichnet, daß**
die Haltenase (8) an ihrer Unter- bzw Rückseite (13) derart gekrümmt oder polygonal ausgebildet ist, daß sie durch die Längsnut (2) des jeweiligen Profilstabes hindurch an beliebiger Stelle der Längsnut (2) in deren hinterschnittenen Bereich (3) einführbar ist.

12. Profilkonstruktion nach Anspruch 9 bis 11, **dadurch gekennzeichnet, daß** die Haltenase (8) mittels eines Steges (11) mit dem übrigen Bereich des Verbindungselementes (5) verbunden ist, und der Steg (11) zumindest auf einem Teilbereich seiner Höhe eine Breite aufweist, die der Breite der Längsnut (2) entspricht.

13. Profilkonstruktion nach Anspruch 9, **dadurch gekennzeichnet, daß**
die Druckstücke (15) an den Seitenflächen des Verbindungselementes (5) angeordnet sind und von deren Unterseiten einen vertikalen Abstand aufweisen, der größer als die Dicke der den hinterschnittenen Bereich (3) bildenden bzw begrenzenden Stege (4) ist.

14. Profilkonstruktion nach Anspruch 13, **dadurch gekennzeichnet, daß**
die Druckstücke (15) innerhalb eines Mittenbereiches (14) des Verbindungselementes (5) angeordnet sind, dessen Breite geringer als die Breite des hinterschnittenen Bereiches (3) der Längsnut (2) ist.

15. Profilkonstruktion nach Anspruch 9, **dadurch gekennzeichnet, daß**
die Breite des Verbindungselementes (5) innerhalb eines an den Mittenbereich (14) anschließenden Endbereiches (17) geringer als die Breite der Längsnuten (2) ist und der Endbereich (17) ein Innengewinde zur Aufnahme eines Befestigungsmittels (18) aufweist.

## Claims

1. Profile construction having at least two profile rods (A, B) which are arranged substantially at right angles with respect to one another and have in each case at least one longitudinal groove (2), which is provided with an undercut, and at least one connecting element (5) for the releasable connection of the two profile rods, **characterized in that**
a.) an end region (6) of the connecting element (5) is configured in such a way that it can be inserted into the longitudinal groove (2) of the profile rod (B) in a substantially parallel position to the longitudinal direction of the profile rod (A), in such a way that a holding lug (8) which is formed on the connecting element (5) engages under one of the lands (4) which form the undercut of the longitudinal groove (2) of the profile rod (B);
b.) the connecting element (5) has a width at least in a part region of its length, which width corresponds to the width of the longitudinal groove (2) of the profile rod (A), with the result that the said profile rod (A) can be pushed over the connecting element (5);
c.) at its end which lies opposite the holding lug (8), the connecting element (5) has an end region (17) for receiving an adjustable fastening means (18) which is supported on the bottom of the longitudinal groove (2) of the profile rod (A);
d.) the connecting element (5) has a centre region (14) with at least two pressure pieces (15) which lie non-positively on the lands (4) of the profile rod (A) which form or delimit the undercut region (3).

2. Profile construction according to Claim 1, **characterized in that** the holding lug (8) has a projection (7) which engages under the land (4) of the profile rod (A).

3. Profile construction according to Claims 1 and 2, **characterized in that** the holding lug (8) is configured to be curved or polygonal on its underside or rear side (13) in such a way that it can be inserted through the longitudinal groove (2) of the respective profile rod at any desired point of the longitudinal groove (2) into its undercut region (3).

4. Profile construction according to Claims 1 to 3, **characterized in that** the holding lug (8) is connected by means of a land (11) to the remaining region of the connecting element (5), and the land (11) has a width at least on a part region of its height, which width corresponds to the width of the longitudinal groove (2).

5. Profile construction according to Claim 1, **characterized in that** the pressure pieces (15) are arranged on the side faces of the connecting element (5) and have a vertical spacing from their undersides which is greater than the thickness of the lands (4) which form or delimit the undercut region (3) of the longitudinal groove (2).

6. Profile construction according to Claim 5, **characterized in that** the pressure pieces (15) are arranged within a centre region (14) of the connecting element (5), the width of which centre region (14) is smaller than the width of the undercut region (3) of the longitudinal groove (2).

7. Profile construction according to Claim 1, **characterized in that** the width of the connecting element (5) within an end region (17) which adjoins the centre region (14) is smaller than the width of the longitudinal grooves (2), and the end region (17) has an internal thread for receiving a fastening means (18).

8. Profile construction according to one or more of the preceding claims, **characterized in that** the overall length of a connecting element (5) is greater by a defined amount than half the width of the profile rods (A, B).

9. Connecting element for use in a profile construction having at least two profile rods which are arranged substantially at right angles with respect to one another and have in each case at least one longitudinal groove, which is provided with an undercut, for the releasable connection of the two profile rods, **characterized in that**
a.) an end region (6) of the connecting element (5) is configured in such a way that it can be inserted into the longitudinal groove (2) of the profile rod (B) in a substantially parallel position to the longitudinal direction of the profile rod (A), in such a way that a holding lug (8) which is formed on the connecting element (5) engages under one of the lands (4) which form the undercut of the longitudinal groove (2) of the profile rod (B);
b.) the connecting element (5) has a width at least in a part region of its length, which width corresponds to the width of the longitudinal groove (2) of the profile rod (A), with the result that the said profile rod (A) can be pushed over the connecting element (5);
c.) at its end which lies opposite the holding lug (8), the connecting element (5) has an end region (17) for receiving an adjustable fastening means (18) which is supported on the bottom of the longitudinal groove (2) of the profile rod (A);
d.) the connecting element (5) has a centre region (14) with at least two pressure pieces (15) which lie non-positively on the lands (4) of the profile rod (A) which form or delimit the undercut region (3).

10. Profile construction according to Claim 9, **characterized in that** the holding lug (8) has a projection (7) which engages under the land (4) of the profile rod (A).

11. Profile construction according to Claims 9 and 10, **characterized in that** the holding lug (8) is configured to be curved or polygonal on its underside or rear side (13) in such a way that it can be inserted through the longitudinal groove (2) of the respective profile rod at any desired point of the longitudinal groove (2) into its undercut region (3).

12. Profile construction according to Claims 9 to 11, **characterized in that** the holding lug (8) is connected by means of a land (11) to the remaining region of the connecting element (5), and the land (11) has a width at least on a part region of its height, which width corresponds to the width of the longitudinal groove (2).

13. Profile construction according to Claim 9, **characterized in that** the pressure pieces (15) are arranged on the side faces of the connecting element (5) and have a vertical spacing from their undersides which is greater than the thickness of the lands (4) which form or delimit the undercut region (3).

14. Profile construction according to Claim 13, **characterized in that** the pressure pieces (15) are arranged within a centre region (14) of the connecting element (5), the width of which centre region (14) is smaller than the width of the undercut region (3) of the longitudinal groove (2).

15. Profile construction according to Claim 9, **characterized in that** the width of the connecting element (5) within an end region (17) which adjoins the centre region (14) is smaller than the width of the longitudinal grooves (2), and the end region (17) has an internal thread for receiving a fastening means (18).

## Revendications

1. Construction profilée comprenant au moins deux barres profilées (A, B) disposées essentiellement à angle droit l'une par rapport à l'autre, avec à chaque fois au moins une rainure longitudinale (2) pourvue d'une contre-dépouille et au moins un élément de connexion (5) pour la connexion amovible des deux barres profilées, **caractérisée en ce que**
a.) une région d'extrémité (6) de l'élément de connexion (5) est réalisée de telle sorte que celle-ci puisse être introduite dans une position essentiellement parallèle à la direction longitudinale de la barre profilée (A) dans la rainure longitudinale (2) de la barre profilée (B) de telle sorte qu'un ergot de retenue (8) réalisé sur l'élément de connexion (5) vienne en prise par le dessous avec l'une des nervures (4) formant la contre-dépouille de la rainure longitudinale (2) de la barre profilée (B) ;
b.) l'élément de connexion (5) présente au moins dans une région partielle de sa longueur une largeur qui correspond à la largeur de la rainure longitudinale (2) de la barre profilée (A), de sorte que celle-ci puisse être poussée par-dessus l'élément de connexion (5),
c.) l'élément de connexion (5), à son extrémité située en regard de l'ergot de retenue (8), présente une région d'extrémité (17) pour recevoir un moyen de fixation réglable (18) qui s'appuie sur le fond de la rainure longitudinale (2) de la barre profilée (A) ;
d.) l'élément de connexion (5) présente une région centrale (14) avec au moins deux éléments de pression (15) qui s'appliquent par engagement par force contre les nervures (4) de la barre profilée (A) formant ou limitant la région (3) en contre-dépouille.

2. Construction profilée selon la revendication 1, **caractérisée en ce que** l'ergot de retenue (8) présente une saillie (7) venant en prise par le dessous avec la nervure (4) de la barre profilée (A).

3. Construction profilée selon les revendications 1 et 2, **caractérisée en ce que** l'ergot de retenue (8) est réalisé au niveau de son côté inférieur ou arrière (13) avec une courbure, ou de manière polygonale, de telle sorte qu'il puisse être introduit à travers la rainure longitudinale (2) de la barre profilée respective à un endroit quelconque de la rainure longitudinale (2) dans sa région en contre-dépouille (3).

4. Construction profilée selon les revendications 1 à 3, **caractérisée en ce que** l'ergot de retenue (8) est connecté au moyen d'une nervure (11) à la région restante de l'élément de connexion (5), et la nervure (11) présente au moins sur une région partielle de sa hauteur, une largeur qui correspond à la largeur de la rainure longitudinale (2).

5. Construction profilée selon la revendication 1, **caractérisée en ce que** les éléments de pression (15) sont disposés sur les surfaces latérales de l'élément de connexion (5) et présentent depuis leur côté inférieur une distance verticale qui est supérieure à l'épaisseur des nervures (4) formant ou limitant la région en contre-dépouille (3) de la rainure longitudinale (2).

6. Construction profilée selon la revendication 5, **caractérisée en ce que** les éléments de pression (15) sont disposés à l'intérieur d'une région centrale (14) de l'élément de connexion (5), dont la largeur est inférieure à la largeur de la région en contre-dépouille (3) de la rainure longitudinale (2).

7. Construction profilée selon la revendication 1, **caractérisée en ce que** la largeur de l'élément de connexion (5) dans une région d'extrémité (17) se raccordant à la région centrale (14) est inférieure à la largeur des rainures longitudinales (2) et la région d'extrémité (17) présente un filetage interne pour recevoir un moyen de fixation (18).

8. Construction profilée selon l'une quelconque ou plusieurs des revendications précédentes, **caractérisée en ce que** la longueur totale d'un élément de connexion (5) est supérieure d'une valeur déterminée à la moitié de la largeur des barres profilées (A, B).

9. Elément de connexion pour l'utilisation dans une construction profilée comprenant au moins deux barres profilées disposées essentiellement à angle droit l'une par rapport à l'autre, avec au moins à chaque fois une rainure longitudinale pourvue d'une contre-dépouille pour la connexion amovible des deux barres profilées, **caractérisé en ce que**
a.) une région d'extrémité (6) de l'élément de connexion (5) est réalisée de telle sorte que celle-ci puisse être introduite dans une position essentiellement parallèle à la direction longitudinale de la barre profilée (A) dans la rainure longitudinale (2) de la barre profilée (B) de telle sorte qu'un ergot de retenue (8) réalisé sur l'élément de connexion (5) vienne en prise par le dessous avec l'une des nervures (4) formant la contre-dépouille de la rainure longitudinale (2) de la barre profilée (B) ;
b.) l'élément de connexion (5) présente au moins dans une région partielle de sa longueur une largeur qui correspond à la largeur de la rainure longitudinale (2) de la barre profilée (A), de sorte que celle-ci puisse être poussée par-dessus l'élément de connexion (5),
c.) l'élément de connexion (5), à son extrémité située en regard de l'ergot de retenue (8), présente une région d'extrémité (17) pour recevoir un moyen de fixation réglable (18) qui s'appuie sur le fond de la rainure longitudinale (2) de la barre profilée (A) ;
d.) l'élément de connexion (5) présente une région centrale (14) avec au moins deux éléments de pression (15) qui s'appliquent par engagement par force contre les nervures (4) de la barre profilée (A) formant ou limitant la région (3) en contre-dépouille.

10. Construction profilée selon la revendication 9, **caractérisée en ce que** l'ergot de retenue (8) présente une saillie (7) venant en prise par le dessous avec la nervure (4) de la barre profilée (A).

11. Construction profilée selon les revendications 9 et 10, **caractérisée en ce que** l'ergot de retenue (8) est réalisé au niveau de son côté inférieur ou arrière (13) avec une courbure, ou de manière polygonale, de telle sorte qu'il puisse être introduit à travers la rainure longitudinale (2) de la barre profilée respective à un endroit quelconque de la rainure longitudinale (2) dans sa région en contre-dépouille (3).

12. Construction profilée selon les revendications 9 à 11, **caractérisée en ce que** l'ergot de retenue (8) est connecté au moyen d'une nervure (11) à la région restante de l'élément de connexion (5), et la nervure (11) présente au moins sur une région partielle de sa hauteur, une largeur qui correspond à la largeur de la rainure longitudinale (2).

13. Construction profilée selon la revendication 9, **caractérisée en ce que** les éléments de pression (15) sont disposés sur les surfaces latérales de l'élément de connexion (5) et présentent depuis leur côté inférieur une distance verticale qui est supérieure à l'épaisseur des nervures (4) formant ou limitant la région en contre-dépouille (3).

14. Construction profilée selon la revendication 13, **caractérisée en ce que** les éléments de pression (15) sont disposés à l'intérieur d'une région centrale (14) de l'élément de connexion (5), dont la largeur est inférieure à la largeur de la région en contre-dépouille (3) de la rainure longitudinale (2).

15. Construction profilée selon la revendication 9, **caractérisée en ce que** la largeur de l'élément de connexion (5) dans une région d'extrémité (17) se raccordant à la région centrale (14) est inférieure à la largeur des rainures longitudinales (2) et la région d'extrémité (17) présente un filetage interne pour recevoir un moyen de fixation (18).
